# EUROPÄISCHE PATENTSCHRIFT

(11) **EP 3 298 679 B1**
(45) Veröffentlichungstag und Bekanntmachung des Hinweises auf die Patenterteilung: **08.07.2020**
(21) Anmeldenummer: 16721187.9
(22) Anmeldetag: 10.05.2016
(51) Int. Cl.: H02K 3/52

(54) **STATOR FÜR EINE ELEKTRISCHE MASCHINE, SOWIE VERFAHREN ZUR HERSTELLUNG EINES SOLCHEN**
STATOR FOR AN ELECTRIC MACHINE AND METHOD FOR PRODUCING SAME
STATOR D'UNE MACHINE ELECTRIQUE ET PROCÉDÉ DE PRODUCTION D'UN TEL STATOR

(30) Priorität: 18.05.2015 DE 102015209041
(43) Veröffentlichungstag der Anmeldung: 28.03.2018
(73) Patentinhaber: Robert Bosch GmbH, 70442 Stuttgart (DE)
(72) Erfinder: VELTE, Uwe, 77833 Ottersweier (DE); PIERSON, Andrew, 77815 Buehl (DE); STUCKE, Ursula, 76547 Sinzheim (DE); HEYNE, Benjamin, 76137 Karlsruhe (DE)
(86) Internationale Anmeldenummer: PCT/EP2016/060403
(87) Internationale Veröffentlichungsnummer: WO 2016/184720

(56) Entgegenhaltungen:
- EP-A1- 1 526 628
- EP-A2- 1 050 948
- EP-A2- 2 352 220
- WO-A1-2013/154054
- DE-A1-102012 202 131
- DE-U1-202009 000 415
- US-A1- 2009 102 312

## Beschreibung

Die Erfindung bezieht sich auf einen Stator für eine elektrische Maschine, sowie ein Verfahren zur Herstellung eines solchen nach der Gattung der unabhängigen Ansprüche.

### Stand der Technik

Mit der DE 102012224153 A1 ist ein Stator einer elektrischen Maschine bekannt geworden, bei dem an einer Stirnseite eine Isolierlamelle mit einer damit verbundenen Verschalteplatte angeordnet ist. An dieser sind an der äußeren Umfangsfläche umlaufende Rillen ausgeformt, in die der Vebindungsdraht zwischen einzelnen Spulen beim Wickeln eingelegt wird. Diese Ausführung hat den Nachteil, dass nach dem Wickeln die Spulen diese nochmals mit einer separaten Kontaktplatte kontaktiert werden müssen, um die Spulen mit einem Kundenstecker zu verbinden. Außerdem weist die Verschalteplatte mit den axial nebeneinander angeordneten Rillen eine große axiale Bauhöhe auf, wodurch der Stator nicht in einen begrenzten Bauraum passt.

Die DE 10328720A1 zeigt einen Stator, bei dem auf jeden Statorzahn eine separate Spule mit einem losen Drahtanfang- und ende gewickelt ist. Diese Drahtenden werden mit einem separaten Verschaltungselement verbunden, das nach dem Wickeln auf den Stator aufgesetzt wird. Das Verschaltungselement weist als Stanzteile ausgebildete Leiterbahnen auf, deren Längserstreckung größer ist als deren radiale Breite. Die Herstellung eines solchen Stators ist sehr aufwändig, da die Spulen einzeln gewickelt werden und die losen Drahtenden Spulen jeweils einzeln an die Leiterstreifen angelötete oder geschweißt werden müssen, wobei eine solche Ausführung ebenfalls eine hohe axiale Ausdehnung hat.

Die DE 20 2009 000 415 U1 zeigt einen elektrisch kommutierten Motor, bei dem zur Verschaltung der einzelnen Spulen des Stators ringförmige Stromschienen in der Isolierlamelle des Stators angeordnet sind. Dabei werden die Wickeldrähte in Haken eingelegt, die sich von den Stromschienen radial nach innen erstrecken.

Mit der DE 10 2012 202 131 A1 ist ebenfalls ein Stator einer elektrischen Maschine bekannt geworden, bei der ringförmige Stromschienen in einer Isolierlamelle des Stators angeordnet sind. An den Stromschienen sind wiederum Hakenelemente ausgebildet, die mit den Enden des Wickeldrahts für das Spulen verbunden werden, wobei hier die Haken radial nach außen geformt sind.

Des Weiteren zeigen die EP 10 50 948 A2, die WO 2013/154054 A1, die EP 23 52 220 A2, die US 2009/102312 A1 und die EP 152 66 28 A1 elektrische Maschinen, bei denen die elektrischen Spulen des Stators mittels einer Kontaktiervorrichtung elektrisch mit einander verschaltet sind.

### Offenbarung der Erfindung

Der erfindungsgemäße Stator, sowie die erfindungsgemäße elektrische Maschine beinhaltend einen solchen Stator, sowie das erfindungsgemäße Herstellungsverfahren eines Stators nach der Gattung der unabhängigen Ansprüche haben den Vorteil, dass durch die Integration der Leiterstreifen in die Isolierlamelle der Wickeldraht ununterbrochen durchgewickelt werden kann, wobei der Draht zwischen dem Wickeln der einzelnen Spulen direkt mit den Kontaktelementen der Leiterstreifen verbunden werden kann. Durch die axial über die Isolierlamelle überstehenden Kontaktelemente kann der Wickeldraht beim Nadelwickeln ohne Zusatzaufwand in den Kontaktelementen abgelegt werden. Dadurch entfällt eine separate Montage einer zusätzlichen Verschaltungsplatte, wodurch auch axialer Bauraum eingespart wird. Dadurch eignet sich ein solcher Stator besonders für den Einbau in die beengten Platzverhältnisse innerhalb eines Kraftfahrzeugtanks.

Durch die in den abhängigen Ansprüchen aufgeführten Maßnahmen sind vorteilhafte Weiterbildungen und Verbesserungen der in den unabhängigen Ansprüchen angegebenen Ausbildungen möglich. Besonders vorteilhaft weisen die Leiterstreifen einen Querschnitt auf, dessen Abmessung in Axialrichtung größer ist als in Radialrichtung. Dadurch können mehrere Leiterstreifen radial nebeneinander angeordnet werden, wobei der Gesamtquerschnitt immer noch groß genug für die mechanische Stabilität und den zu erwarteten Stromfluss ausgelegt ist. Durch die relativ dünne Ausbildung in Radialrichtung können alle Leiterstreifen im axialen Bereich der oberen Wickelköpfe der Spulen angeordnet werden, so dass der Stator insgesamt in Axialrichtung sehr flach bauend ausgebildet werden kann.

Prozesstechnisch können die Leiterstreifen sehr günstig als Biegestanzteile hergestellt werden, wobei durch das Biegen eines Rings aus einem Längsstreifen sehr wenig Blechverschnitt anfällt. Dabei können die Leiterstreifen derart aus dem Blech ausgestanzt werden, dass jeweils die einstückig angeformten Kontaktelemente gegensinnig ineinander greifen. Im Vergleich zu flächig in der Radialebene ausgebildeten Leiterelementen kann durch das Umbiegen zu einem ringförmigen Leiterstreifen sehr viel Blechmaterial eingespart werden.

Dabei können die ringförmig gebogenen Leiterstreifen sehr kostengünstig direkt in ringförmig umlaufenden Vertiefungen in der Isolierlamelle eingelegt werden. Diese Vertiefungen sind vorzugsweise als Nuten mit einem rechteckförmigen Querschnitt entsprechend dem Querschnitt der Leiterstreifen ausgebildet. Dadurch ergeben sich zwischen den einzelnen Nuten in Axialrichtung axiale Trennwände zwischen den einzelnen Nuten, die sehr dünn ausgebildet sein können und als Isolierung zwischen den radial benachbarten Leiterstreifen dienen. Der ringförmige Grundkörper der Leiterstreifen ist bevorzugt axial vollständig in die entsprechende Nut der Isolierlamelle eingetaucht, so dass nur noch die Kontaktelemente und die Abstützlaschen der Leiterstreifen axial aus den Nuten herausragen. Dadurch sind die Leiterstreifen elektrisch zuverlässig gegeneinander isoliert und mechanisch stabil in der Isolierlamelle gehalten. Zur Montage der Leiterstreifen können in der Isolierlamelle beispielsweise Klemmelemente ausgebildet sein, in die die Leiterstreifen direkt eingepresst werden.

In einer bevorzugten Ausführung des Stators weist dieser genau drei Phasen auf, mittels deren Anschlusslaschen die Spulen bestromt werden. Dabei wird jede Phase durch genau einen Leiterstreifen gebildet, der entsprechende Kontaktelemente zur Verbindung mit dem Spulendraht aufweist. Werden die Anschlusslaschen der Leiterstreifen radial zur Isolierlamelle aus dieser herausgeführt, kann ein entsprechender Kundenanschlussstecker seitlich vom Stator kontaktiert werden, so dass die Bauhöhe des Stators weiter reduziert werden kann. Dazu ist an der Isolierlamelle bevorzugt ein radialer Fortsatz angeordnet, der beispielsweise als Gegenstecker für den Kundenstecker ausgebildet sein kann.

Um die Kontaktelemente der Leiterstreifen beim durchgehenden Wickeln zu entlasten, weisen die Leiterstreifen erfindungsgemäß axiale Abstützlaschen auf, um die der Wickeldraht geführt wird. Damit der Wickeldraht an den Abstützlaschen nicht beschädigt wird, ist radial außerhalb der Abstützlaschen die Nut-Zwischenwand zwischen zwei Nuten im Bereich der Abstützlasche axial höher ausgebildet, so dass dieser axiale Fortsatz der Nut-Zwischenwand eine elektrische Isolation zwischen der Abstützlasche und dem Wickeldraht bildet. So kann der Wickeldraht vorteilhaft nach dem Einlegen in die Kontaktelemente direkt anschließend radial außerhalb um die axialen Fortsätze der Nut-Zwischenwand gewickelt werden. Dadurch können die Spulen sehr straff auf die Statorzähne gewickelt werden, ohne dass hierbei das Kontaktelement deformiert werden.

Besonders günstig können alle Abstützlaschen an einem einzigen Leiterstreifen, insbesondere dem radial mittleren Leiterstreifen ausgebildet werden, wobei diese die Kräfte aufnehmen können, die auf die Anschlusselemente auf den radial unterschiedlich angeordneten Leiterstreifen wirken. Zweckmäßigerweise wird in Umfangsrichtung zwischen jedem Statorzahn ein Kontaktelement angeordnet in das der Wickeldraht beim durchgängigen Wickeln der Spulen eingelegt wird. Die in Umfangsrichtung benachbarten Kontaktelemente sind dabei auf verschiedenen radialen Bahnen der unterschiedlichen Leiterstreifen angeordnet. Dadurch wird die elektrische Verschaltung der unterschiedlichen elektrischen Phasen realisiert. Weisen die Kontaktelemente einen in Radialrichtung durchgehenden Schlitz auf, kann der Wickeldraht beim Durchwickeln direkt in die Kontaktelemente eingelegt werden. In einem späteren Verfahrensschritt kann dann eine elektrische Verbindung - beispielsweise mittels Warmverprägen oder Verschweißen - hergestellt werden.

Bei diesen Ausführungen ist auf jeden Statorzahlen immer nur genau eine Spule angeordnet, die über den ununterbrochenen Verbindungsdraht mit der in Umfangsrichtung benachbarten Spule verbunden ist. Bevorzugt weist der Stator insgesamt zwölf Spulen auf, wobei entsprechend über den Umfang genau zwölf Abstützlaschen und zwölf oder dreizehn Kontaktelemente angeordnet sind. Das Ende des Wickeldrahts kann dabei in das erste Kontaktelement eingelegt werden (insgesamt zwölf Kontaktelemente) - oder alternativ in ein separates benachbartes Kontaktelement (insgesamt dreizehn Kontaktelemente).

Mit dem erfindungsgemäßen ununterbrochenen Durchwickeln des Wickeldrahts können die einzelnen Spulen in einer Dreiecksschaltung in vierfacher paralleler Ausführung verschaltet werden. Dadurch kann eine optimale elektrische Ansteuerung der Spulen realisiert werden, um eine maximale Leistungsdichte des magnetischen Flusses zu erzeugen.

Besonders zweckmäßig wird die Isolierlamelle vor dem Wickeln direkt auf den Statorgrundkörper aufgespritzt. Dadurch sind insbesondere die Statorzähne optimal gegenüber der Drahtwicklung isoliert. Außerdem können mittels Spritzgießen sehr günstig die Geometrien für die Nuten der Leiterstreifen ausgebildet werden. Vorteilhaft kann des Weiteren einstückig mit der Isolierlamelle der radiale Fortsatz für die Aufnahme der Anschlusslaschen der Leiterstreifen angespritzt werden. Eine solche angespritzte Isolierlamelle kann sich über beide axiale Stirnseiten des Statorgrundkörpers erstrecken, die entlang den Statorzähnen einteilig miteinander verbunden sind.

Der Stator kann sehr günstig aus einzelnen Blechlamellen aufgebaut werden, die als ringförmig geschlossene Blechlamellen ausgestanzt werden können. Beim Stanzen kann gleichzeitig am radial äußeren Umfang eine Öse ausgebildet werden, die beim axialen Stapeln der einzelnen Blechlamellen eine Befestigungsbohrung für das Einfügen eines Verbindungselements bildet. Dabei erstrecken sich die Statorzähne bevorzugt radial nach innen, so dass der Rotor als Innenläufer ausgebildet ist. Um den hohen Schüttelbelastungen im Kraftfahrzeugbereich, insbesondere bei der Verwendung im LKW, gerecht zu werden, wird die komplette Drahtwicklung nach der elektrischen Kontaktierung mit den Kontaktelementen mit einer zweiten Kunststoffmasse umspritzt. Dadurch sind die leitenden Elemente einerseits zuverlässig gegen Korrosion geschützt (was für den Einsatz im Kraftstofftank von Vorteil ist), und anderseits wird verhindert, dass der Wickeldraht bricht oder sich eine elektrische Kontaktierung löst. Da die Befestigungsöffnung weiterhin aus der zweiten Kunststoffmasse radial hervorstehen, ist kein weiteres Gehäuse für den Stator notwendig, sondern dieser kann direkt mittels den Befestigungsöffnungen am Kraftfahrzeug festgeschraubt oder in anderer Weise befestigt werden.

Eine elektrische Maschine mit solch einem Stator eignet sich aufgrund der besonders flachen Bauweise und der Kunststoffummantelung der stromleitenden Elemente besonders für den Einbau in den Kraftstofftank eines Kraftfahrzeugs, insbesondere zur Förderung von Diesel aus dem Tank zum Motor.

Mit dem erfindungsgemäßen Herstellungsverfahren kann der Stator in einem Prozessschritt mit dem Wickeln der Spulen gleichzeitig mit den Phasenanschlüssen kontaktiert werden, ohne dass eine weitere separate Verschaltungsplatte montiert werden muss. Dadurch dass die Leiterstreifen vor dem Beginn des Wickelns in die Isolierlamelle eingebettet sind, können direkt parallele Dreiecksschaltungen der bewickelten Spulen hergestellt werden. Durch das Anspritzen sowohl der Isolierlamelle, als auch des zweiten Kunststoffkörpers, kann die Geometrie für die Leiterstreifen und deren Anschlusslaschen leicht an die Kundenanforderungen angepasst werden.

Da die elektrische Kontaktierung der Spulen vollständig auf einer ersten Stirnseite des Stators realisiert wird, sind auf der gegenüberliegenden zweiten Stirnseite keine elektrische Kontakte mit Leiterelementen notwendig. Dadurch kann die Wicklung besonders vorteilhaft mittels einer Nadelwickelmaschine ausgeführt werden, bei der die Nadel axial durch den ringförmigen Stator hindurchgeführt wird. Dabei kann der Wickeldraht an der ersten Stirnseite direkt in die Kontaktelemente eingelegt und um die Abstützlaschen herumgeführt werden. Durch das hochkantige Einlegen der Leiterstreifen radial nebeneinander im Bereich der axialen Ausdehnung der Spulen, kann der Stator durch dieses Verfahren besonders flach gebaut werden. Alternativ könnte zur Kontaktierung des Wickeldrahts mit den Kontaktelementen eine Schneidklemmverbindung verwendet werden, so dass ein zusätzlicher Prozessschritt für die elektrische Kontaktierung entfällt.

Durch die konkrete Anordnung der axialen Fortsätze der Nut-Zwischenwand mit den Abstützlaschen kann eine sogenannte tote-Impedanz (aufgrund dem Widerstand der Drahtlänge) zwischen den Wicklungen ausgeglichen werden. Damit kann gewährleistet werden, dass beim Wickeln der freiliegende Draht immer ein Zuziehen an der Wicklung bewirkt. Ebenso kann die Breite in Umfangsrichtung der axialen Abstützlaschen variiert werden, um die Drahtspannung zwischen den Spulen zu optimieren. Da die Leiterstreifen als Ringe ausgebildet sind, die nicht geschlossen sind können die offenen Enden des offenen Rings zusätzlich abgestützt werden, um eine radiale Verformung der Leiterstreifen zu vermeiden.

Der erfindungsgemäße Stator wird in elektrischen Maschinen eingesetzt, beispielsweise in Antriebsmotoren, welche in Kraftfahrzeugen Verwendung finden. Bei der elektrischen Maschine handelt es sich beispielsweise um einen Innenläufermotor mit außen liegendem, ringförmig umgreifendem Stator und einem innen liegenden Rotor.

### Kurze Beschreibung der Zeichnungen

Ausführungsbeispiele der Erfindung sind in den Zeichnungen dargestellt und in der nachfolgenden Beschreibung näher erläutert. Es zeigen:
- Fig. 1: Eine Explosionsdarstellung eines erfindungsgemäßen Stators
- Fig. 2: Einen Ausschnitt eines fertig gewickelten Stators
- Fig. 3: Das Wickelschema einer erfindungsgemäßen Spulenanordnung
- Fig. 4: Eine Dreiecksschaltung einer der erfindungsgemäßen Ausführungsbeispiele
- Fig. 5: Eine weitere Ausführung eines komplett umspritzten Stators und
- Fig. 6: Ein Schnitt durch den Stator in Figur 5

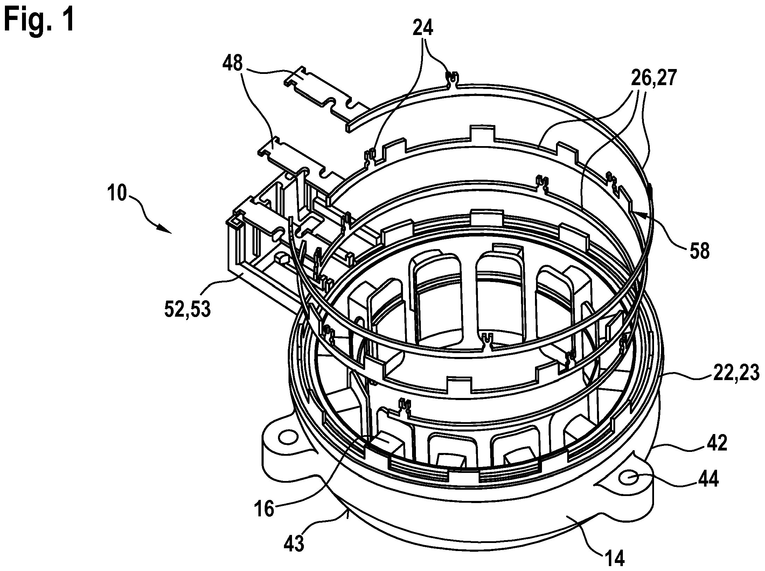

In Figur 1 ist ein Stator 10 dargestellt, wie er beispielsweise in elektrischen Maschinen 11, insbesondere einem elektrisch kommutierten Elektromotor 12 verwendet wird. Der Stator 10 weist ein Statorgrundkörper 14 auf, der sich aus einzelnen Lamellenblechen 40 zusammensetzt. Dabei erstrecken sich vom Statorgrundkörper 14 radial nach innen Statorzähne 16, die einteilig mit den jeweiligen Lamellenblechen 40 ausgebildet sind. Am äußeren Rand 42 weist der Statorgrundkörper 14 Aufnahmeöffnungen 44 für Verbindungselemente auf, mit denen der Stator 10 beispielsweise im Kraftfahrzeug befestigt wird. Die Lamellenbleche 40 sind beispielsweise als Stanzteile ausgebildet, die einen geschlossenen Ring bilden, an dem die Aufnahmeöffnungen 44 einstückig angeformt sind. Auf dem Statorgrundkörper 14 ist an einer ersten Stirnseite 41 eine Isolierlamelle 22 angeordnet, die näherungsweise die gesamte Fläche der Lamellenbleche 40 abdeckt. Die Isolierlamelle 22 erstreckt sich beispielsweise auch in Axialrichtung 30 entlang der Statorzähne 16. Ebenso ist die gegenüberliegende Stirnseite 43 mit der Isolierlamelle 22 bedeckt, wobei im Ausführungsbeispiel die Isolierlamelle 22 einstückig als Umspritzung 23 des Statorgrundkörpers 14 ausgebildet ist. In einer alternativen Ausführung kann die Isolierlamelle 22 jedoch auch als separates Bauteil ausgebildet sein, bei dem insbesondere zwei separate Teile jeweils axial auf den Statorgrundkörper 14 gefügt werden (auf die erste und zweite Stirnseite 41, 43). In der Isolierlamelle 22 sind ringförmige Nuten 46 ausgeformt, in die jeweils ringförmige Leiterstreifen 26 axial eingefügt werden. Hierzu sind beispielsweise in den Nuten 46 Klemmrippen angeordnet, um die Leiterstreifen 26 fest in den Nuten 46 zu verpressen. Die Leiterstreifen 26 sind als Biegestanzteile ausgebildet und bilden die Stromversorgung für die Spulen 18. Der Querschnitt 28 der Leiterstreifen ist etwa rechteckförmig, wobei sich dessen Längsseite in Axialrichtung 30 erstreckt. Im Ausführungsbeispiel bildet jeder der drei Leiterstreifen 26 eine eigene elektrische Phase 50 u, v, w. Dazu weist jeder Leiterstreifen 26 eine Anschlusslasche 48 auf, die mit einem kundenspezifischen Anschlussstecker kontaktiert werden. Die Anschlusslaschen 48 stehen axial nicht über die ringförmigen Leiterstreifen 26 hinaus, sondern sind radial abgewinkelt, um die Bauhöhe des Stators zu reduzieren. Dabei werden die Anschlusslaschen 48 in einem radialen Fortsatz 52 der Isolierlamelle 22 geführt der beispielsweise als Gegenstück 53 zu dem (nicht dargestellten) kundenspezifischen Anschlussstecker ausgebildet ist. An allen Leiterstreifen 26 sind jeweils axial abstehende Kontaktelemente 24 angeformt, mit denen der Wickeldraht 20 elektrisch kontaktiert wird. Die ringförmigen Leiterstreifen 26 sind in Umfangsrichtung 34 über einen großen Bereich in Radialrichtung 32 beabstandet zueinander angeordnet, so dass die einzelnen Leiterstreifen 26 einen unterschiedlichen Durchmesser aufweisen. Zwischen zwei radial benachbarten Nuten 46 bilden die Seitenflächen 47 der Nuten 46 eine Isolierwand 49 zwischen den ringförmigen Leiterstreifen 26. An einer dieser Isolierwände 49 sind in Umfangsrichtung 34 beabstandet zueinander axiale Fortsätze 56 ausgebildet, die zur Führung des Wickeldrahts 20 vorgesehen sind. Dabei ist die Anzahl dieser axialen Fortsätze 56 gleich der Zahl der Statorzähne 16. Zur mechanischen Unterstützung dieser axialen Fortsätze 56 weist hier der mittlere Leiterstreifen 26 Abstützlaschen 58 auf, die sich ebenfalls in Axialrichtung 30 erstrecken. Die Fläche der axialen Fortsätze 56 aus Kunststoff ist dabei geringfügig größer als die Fläche der Abstützlaschen 58 aus Blech, damit die elektrisch leitenden Abstützlaschen 58 zuverlässig gegenüber dem Wickeldraht 20 isoliert sind. Die Kontaktelemente 24 sind bezüglich der Umfangsrichtung 34 abwechselnd auf den verschiedenen Leiterstreifen 26 angeordnet. Sie sind als Klemmzungen 25 ausgebildet, die jeweils einen schlitzförmigen Durchbruch 60 in Radialrichtung 32 aufweisen, durch den der Wickeldraht 20 gelegt wird.

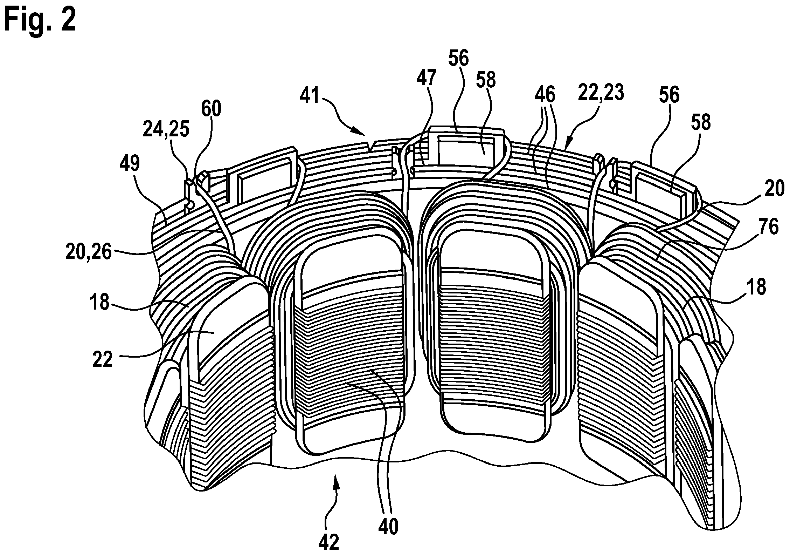

Der fertiggewickelte Stator 10 ist in Figur 2 dargestellt. Auf jedem Statorzahn 16 ist genau eine elektrische Spule 18 gewickelt, wobei alle elektrische Spulen 18 mittels eines einzigen ununterbrochenen Wickeldrahts 20 durchgewickelt werden. Dabei wird der Wickeldraht 20 am Ende einer Spule 18 radial nach außen durch den Schlitz 60 der Klemmzunge 25 geführt. Danach wird der Wickeldraht 20 in Umfangsrichtung 34 radial ausserhalb des nächsten radialen Fortsatzes 56 gelegt, bevor der Wickeldraht 20 unmittelbar danach die nächste elektrische Spule 18 auf dem nächstliegenden Statorzahn 16 bildet. Dabei wird der Wickeldraht 20 derart um den axialen Fortsatz 56 geführt, dass zwei benachbarte Spulen 18 den gleichen Wickelsinn aufweisen. Das Bewickeln des - Stators 10 wird bei dieser Ausführung mittels Nadelwickeln durchgeführt, so dass die Wickelnadel den Wickeldraht 20 sowohl direkt im Schlitz 60 des Kontaktelements 24 ablegt, als auch den Wickeldraht 20 um den durch die Abstützlasche 58 verstärkten axialen Fortsatz 56 führt. Nach der Fertigstellung aller (beispielsweise 12) Spulen 18 kann das Ende des Wickeldrahts 20 im gleichen Kontaktelement 24 abgelegt werden, wie der Beginn des Wickeldrahts 20 vor dem Wickeln der ersten Spule 18. Alternativ ist es aber auch möglich, für das Ende des Wickeldrahts 20 ein weiteres Kontaktelement 62 auszubilden, das unmittelbar benachbart zum Kontaktelement 24 mit dem Wickeldrahtanfang angeordnet ist.

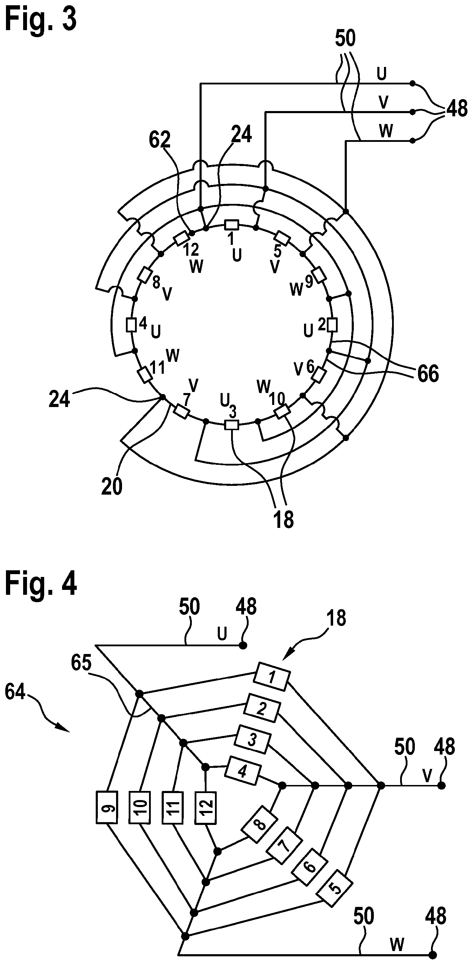

Ein entsprechendes Wickelschema ist in Figur 3 dargestellt, bei dem jede Phase 50 u, v, w jeweils genau einem Leiterstreifen 26 zugeordnet ist. In einem inneren Ring sind in Figur 3 schematisch die elektrischen Spulen 18 dargestellt, die mittels des durchgewickelten Wickeldrahts 20 alle miteinander verbunden sind. Radial ausserhalb der Spulen 18 sind die drei Leiterstreifen 26 ringförmig, radial benachbart zueinander angeordnet. Da jeder Leiterstreifen 26 eine elektrische Phase 50 bildet, sind die einzelnen Phasen 50 mittels der Kontaktelemente 24 in Umfangsrichtung 34 abwechselnder Leiterstreifen 26 mit den Verbindungsdrähten 66 zwischen den einzelnen Spulen 18 elektrisch verbunden. Dadurch sind die Verbindungsdrähte 66 in Umfangsrichtung34 immer in der Reihenfolge u, v, w, mit den jeweiligen Phasenanschlüssen 48 verbunden. Als Resultat ergibt sich eine vierfache Dreiecksschaltung 64, wie diese in Figur 4 dargestellt ist. Dadurch sind jeweils vier Spulen 18 einer Phase 50 parallel zueinander geschaltet. Bei dieser Darstellung entspricht jede der drei radialen Leitungen 65 jeweils einem Leiterstreifen 26, mit den jeweiligen Phasenanschlüssen 48 u, v, w.

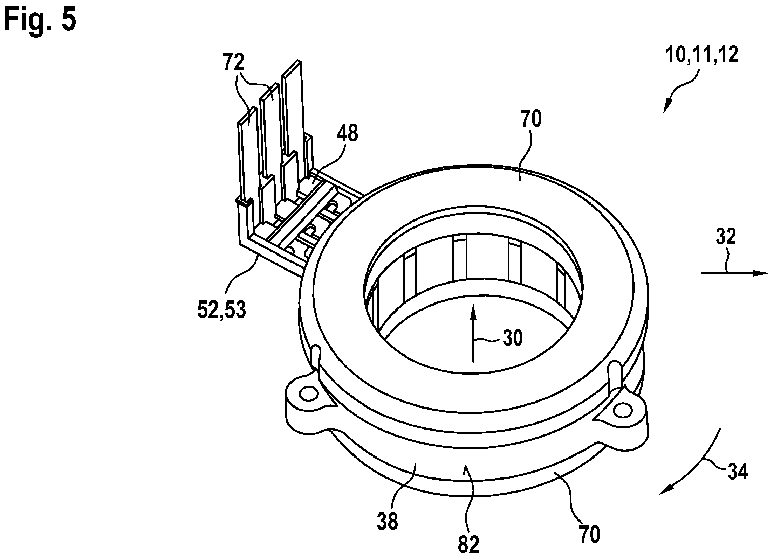

Nach dem Beenden des Wickelvorgangs wird der Wickeldraht 20 beispielsweise mittels Warmverprägen mittels zweier Elektroden mit den Kontaktelementen 24 elektrisch kontaktiert. Danach werden die Spulen 18 mit den Verbindungsdrähten 66 und dem ringförmigen Teil der Leiterstreifen 26 mit einer weiteren Kunststoffmasse 70 umgossen, damit die gesamte Wicklung auch hohen Schüttelanforderungen, beispielsweise in einem LKW-Betrieb, standhält. Solch ein fertig umspritzter mit einer zweiten Kunststoffmasse 70 umspritzter Stator 10 ist in Figur 5 dargestellt. Mit der zweiten Umspritzung 70 werden auch alle Kontaktelemente 24 und deren elektrische Kontaktierung zum Wickeldraht 20 vollständig umschlossen. Dabei erstreckt sich die zweite Umspritzung 70 axial oberhalb der Isolierlamelle 22 und den Spulen 18. Sie erstreckt sich weiter auch in Axialrichtung 30 zwischen den Spulen 18 und an der gegenüberliegenden Stirnseite 43 des Statorgrundkörpers 14. Nach der zweiten Umspritzung mittels dem Kunststoffkörper 70 ragt der radiale Fortsatz 52 der Isolierlamelle 22 mit den darin angeordneten Anschlusslaschen 48 aus dem zweiten Kunststoffkörper 70 heraus. Im Ausführungsbeispiel sind an diese Anschlusslaschen 48 winkelig in Axialrichtung 30 Anschlusspins 72 angeordnet, die axial in einen entsprechenden Kundenstecker einfügbar sind.

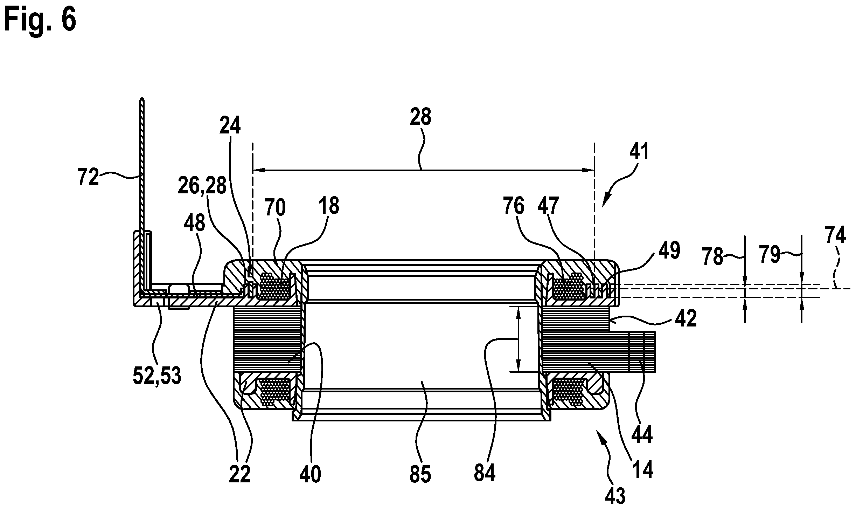

In Figur 6 ist ein Schnitt durch das Ausführungsbeispiel gemäß Figur 5 dargestellt, das die vollständige Kunststoffummantelung der Spulen 18 und der ringförmigen Teile der Leiterstreifen 26 zeigt. Auf der rechten Seite ist ersichtlich, dass die ringförmigen Leiterstreifen 26 in der gleichen axialen Ebene 74 angeordnet sind, wie die Wickelköpfe 76 der Spulen 18. Ebenso ist ersichtlich, dass die axiale Höhe 78 der Leiterstreifen 26 geringer ist, als die axiale Tiefe 79 der Nuten 46, so dass lediglich die Kontaktelemente 24 axial aus den Nuten 46 herausragen. Die zweite Umspritzung 70 ist jedoch in Axialrichtung 30 so hoch ausgebildet, dass auch die Kontaktelemente 24 und die axialen Fortsätze 56 mit den Abschlusslaschen 58 komplett umspritzt sind. Auf der linken Seite ist zu erkennen, wie die Anschlusslaschen 48 der Leiterelemente 26 radial nach aussen geführt werden, wobei diese axial zwischen dem radialen Fortsatz 52 der Isolierlamelle 22 und dem zweiten Kunststoffkörper 70 angeordnet sind. Im Ausführungsbeispiel werden auch die Anschlusslaschen 48 mittels der zweiten Kunststoffkörper 70 in dem radialen Fortsatz 52 fixiert. Im axialen mittleren Bereich 38 bilden die Blechlamellen 40 die radiale Aussenwand 82 des Stators 10 und sind insbesondere nicht umspritzt. Die Befestigungsöffnung 44 der Blechlamellen 40 liegt radial außerhalb der Isoliermaske 22, so dass entsprechende Verbindungselemente axial durch die Befestigungsöffnungen 44 - beispielsweise Schrauben - geschoben werden können. Die Befestigungsöffnung 44 erstreckt sich beispielsweise nicht über die gesamte axiale Länge des Statorgrundkörpers 14, sondern nur über einen axialen Teilbereich der axialen Länge 84. Im inneren des Stators 10 ist ein zylindrischer Hohlraum 85 ausgebildet, in den nach der fertigen Montage des Stators 10 ein entsprechender Rotor axial eingeführt wird. Durch die flache Bauweise des Stators 10 und die vollständige Umspritzung des Wickeldrahts 20 kann der entsprechende Elektromotor 12 besonders günstig in einen Kraftstofftank eines Kraftfahrzeugs eingebaut werden.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise die konkrete Ausbildung, die Anordnung und Anzahl der Spulen 18, sowie die Ausbildung der Leiterstreifen 26 mit den Kontaktelementen 48 entsprechend variiert werden. Ebenso kann die Lage und Ausbildung der Anschlusslaschen 48 und der Schnittstelle zum Kundenstecker den Anforderungen der elektrischen Maschine 11 und den Fertigungsmöglichkeiten angepasst werden. Die Erfindung eignet sich in besonderer Weise für den Antrieb einer Kraftstoffpumpe, insbesondere für Diesle in einem LKW-Tank, ist jedoch nicht auf diese Anwendung beschränkt.

## Patentansprüche

1. Stator (10) für eine elektrische Maschine (11), mit einem ringförmigen Statorgrundkörper (14), der radiale Statorzähne (16) zur Aufnahme von elektrischen Spulen (18) aufweist, wobei an einer ersten Stirnseite (41) des Statorgrundkörpers (14) eine Isolierlamelle (22) angeordnet ist, die die aus Wickeldraht (20) gewickelten Spulen (18) gegenüber dem Statorgrundkörper (14) isoliert, wobei in der Isolierlamelle (22) Leiterstreifen (26) angeordnet sind, die elektrische, sich axial erstreckende Kontaktelemente (24) aufweisen, an die beim Wickeln der Spulen (18) der Wickeldraht (20) angelegt wird, **dadurch gekennzeichnet, dass** zumindest an einem Leiterstreifen (26) mehrere sich axial erstreckende Abstützlaschen (58) angeformt sind, die den Wickeldraht (20) in Radialrichtung (32) abstützen, wobei die Abstützlaschen (58) an ihrer radialen Außenseite von einer als axiale Fortsätze (56) ausgebildeten Kunststoffwand der Isolierlamelle (22) abgedeckt sind.

2. Stator (10) nach Anspruch 1, **dadurch gekennzeichnet, dass** die Leiterstreifen (26) einen zumindest näherungsweise rechteckförmigen Leiterquerschnitt (28) aufweisen und bezüglich der Axialrichtung (30) hochkant in der Isolierlamelle (22) angeordnet sind.

3. Stator (10) nach Anspruch 2, **dadurch gekennzeichnet, dass** die Leiterstreifen (26) als Stanzbleche ausgebildet sind, die sich ringförmig in der Isolierlamelle (22) erstrecken.

4. Stator (10) nach einem der vorherigen Ansprüche, **dadurch gekennzeichnet, dass** die Isolierlamelle (22) ringförmig umlaufende Nuten (46) aufweist, in die die Leiterstreifen (26) eingefügt - insbesondere verklemmt - sind.

5. Stator (10) nach einem der vorherigen Ansprüche, **dadurch gekennzeichnet, dass** zur Ausbildung von drei elektrischen Phasen (50) genau drei Leiterstreifen (26) angeordnet sind, die jeweils ein elektrisches Anschlusselement (48) aufweisen, das sich insbesondere radial zum Statorgrundkörper (14) erstreckt.

6. Stator (10) nach einem der vorherigen Ansprüche, **dadurch gekennzeichnet, dass** an dem radial mittleren Leiterstreifen (26) die mehrere sich axial erstreckende Abstützlaschen (58) angeformt sind.

7. Stator (10) nach einem der vorherigen Ansprüche, **dadurch gekennzeichnet, dass** in Umfangsrichtung (34) zwischen jedem Statorzahn (16) ein Kontaktelement (24) angeordnet ist, und insbesondere die Kontaktelemente (24) als Klemmzunge (25) mit einem Schlitz (60) ausgebildet sind, durch den der Wickeldraht (20) radial geführt ist.

8. Stator (10) nach einem der vorherigen Ansprüche, **dadurch gekennzeichnet, dass** auf jedem Statorzahn (16) genau eine Spule (18) gewickelt ist, und zwischen den Spulen (18) der Wickeldraht (20) ununterbrochen mit dem jeweiligen Kontaktelement (24) - vorzugsweise mittels Warmverprägen - elektrisch verbunden ist, und insbesondere radial außerhalb um die jeweilige Abstützlasche (58) geführt ist.

9. Stator (10) nach einem der vorherigen Ansprüche, **dadurch gekennzeichnet, dass** alle Spulen (18) einer Phase (50) elektrisch parallel zueinander in einer Dreiecksschaltung angeordnet sind - und insbesondere insgesamt genau zwölf Spulen (18) in drei Phasen (50?) ausgebildet sind.

10. Stator (10) nach einem der vorherigen Ansprüche, **dadurch gekennzeichnet, dass** die Isolierlamelle (22) als Kunststoffumspritzung des Statorgrundkörpers (14) ausgebildet ist, wobei ein radialer Fortsatz (52) zur Aufnahme der Anschlusselemente (48) der Leiterstreifen (26) angeformt ist.

11. Stator (10) nach einem der vorherigen Ansprüche, **dadurch gekennzeichnet, dass** der Statorgrundkörper (14) aus einzelnen ringförmig geschlossenen, axial gestapelten Blechlamellen (40) zusammengesetzt ist, wobei die Blechlamellen (40) an ihrem radial äußeren Rand (82) Ösen ausbilden, die als Befestigungsöffnung (44) für Verbindungselemente zur Befestigung des Stators (10) dienen.

12. Stator (10) nach einem der vorherigen Ansprüche, **dadurch gekennzeichnet, dass** der Wickeldraht (20) vollständig mittels eines zweiten Kunststoffes (70) umspritzt ist - insbesondere inklusive der Isolierlamelle (22) mit den Leiterstreifen (26).

13. Elektrische Maschine (11), insbesondere ein elektronisch kommutierter Elektromotor (12), mit einem Stator (10) nach einem der vorherigen Ansprüche, und einem Permanentmagnetpole aufweisendem Rotor, der radial innerhalb des Stators (10) angeordnet ist, wobei die elektrische Maschine (11) für den Einsatz in einem flüssigen Medium geeignet ist und vorzugsweise eine Kraftstoffpumpe innerhalb eines Kraftstofftanks antreibt.

14. Verfahren zum Herstellen eines Stators (10) nach einem der vorherigen Ansprüche, **gekennzeichnet durch** folgende Schritte:
- Umspritzen eines Statorgrundkörpers (14) mit radialen Statorzähnen (16) zur Ausbildung der Isolierlamelle (22)
- Einfügen von Leiterstreifen (26) mit Kontaktelementen (24) in die Isolierlamelle (22)
- Wickeln der Spulen (18) auf den Statorzähnen (16), wobei der Wickeldraht (20) beim Wickvorgang zwischen den Statorzähnen (16) mit den Kontaktelementen (24) verbunden wird
- Vorzugsweise Umspritzen des Wickeldrahts (20) nach dessen elektrischer Kontaktierung mit den Kontaktelementen (24).

15. Verfahren nach Anspruch 14, **dadurch gekennzeichnet, dass** das Wickeln der Spulen (18) mittels Nadelwickeln ausgeführt wird, wobei die Wickelnadel nach der Fertigstellung einer ersten Spule (18) den Wickeldraht (20) direkt in einen Schlitz (60) des Kontaktelements (24) ablegt und den Wickeldraht (20) radial außerhalb um ein Abstützelement (58) der Isolierlamelle (22) führt und anschließend ohne Unterbrechung des Wickeldrahts (20) die nächste Spule (18) - insbesondere auf den in Umfangsrichtung (34) unmittelbar benachbarten - Statorzahn (16) wickelt.

## Claims

1. Stator (10) for an electrical machine (11), comprising an annular stator main body (14) which has radial stator teeth (16) for receiving electrical coils (18), wherein an insulating lamination (22) which insulates the coils (18), which are wound from winding wire (20), from the stator main body (14) is arranged on a first end side (41) of the stator main body (14), wherein conductor strips (26) which have electrical, axially extending contact elements (24) against which the winding wire (20) is placed during winding of the coils (18) are arranged in the insulating lamination (22), **characterized in that** a plurality of axially extending supporting tabs (58) which support the winding wire (20) in the radial direction (32) are integrally formed at least on one conductor strip (26), wherein the supporting tabs (58) are covered on their radial outer side by a plastic wall of the insulating lamination (22), which plastic wall is designed in the form of axial projections (56) .

2. Stator (10) according to Claim 1, **characterized in that** the conductor strips (26) have an at least approximately rectangular conductor cross section (28) and are arranged upright with respect to the axial direction (30) in the insulating lamination (22).

3. Stator (10) according to Claim 2, **characterized in that** the conductor strips (26) are designed in the form of stamped metal sheets which extend in an annular manner in the insulating lamination (22).

4. Stator (10) according to one of the preceding claims, **characterized in that** the insulating lamination (22) has annularly encircling slots (46) into which the conductor strips (26) are inserted - in particular clamped.

5. Stator (10) according to one of the preceding claims, **characterized in that** precisely three conductor strips (26), which each have an electrical connection element (48) which extends in particular radially in relation to the stator main body (14), are provided for the purpose of forming three electrical phases (50).

6. Stator (10) according to one of the preceding claims, **characterized in that** the plurality of axially extending supporting tabs (58) are integrally formed on the radially central conductor strip (26).

7. Stator (10) according to one of the preceding claims, **characterized in that** a contact element (24) is arranged between each stator tooth (16) in the circumferential direction (34), and in particular the contact elements (24) are designed in the form of a clamping tongue (25) with a slit (60) by which the winding wire (20) is radially guided.

8. Stator (10) according to one of the preceding claims, **characterized in that** precisely one coil (18) is wound on each stator tooth (16) and, between the coils (18), the winding wire (20) is electrically connected in an uninterrupted manner to the respective contact element (24) - preferably by means of hot stamping - and is guided in particular radially outside around the respective supporting tab (58).

9. Stator (10) according to one of the preceding claims, **characterized in that** all coils (18) of a phase (50) are arranged electrically in parallel to one another in a delta circuit - and in particular a total of precisely twelve coils (18) are formed in three phases (50) .

10. Stator (10) according to one of the preceding claims, **characterized in that** the insulating lamination (22) is designed in the form of a plastic injection-moulded encapsulation of the stator main body (14), wherein a radial projection (52) for receiving the connection elements (48) of the conductor strips (26) is integrally formed.

11. Stator (10) according to one of the preceding claims, **characterized in that** the stator main body (14) is composed of individual, annularly closed, axially stacked sheet-metal laminations (40), wherein the sheet-metal laminations (40) form eyelets at their radially outer edge (82), which eyelets serve as fastening openings (44) for connecting elements for fastening the stator (10).

12. Stator (10) according to one of the preceding claims, **characterized in that** the winding wire (20) is completely encapsulated by injection moulding by means of a second plastic (70) - in particular including the insulating lamination (22) with the conductor strips (26) .

13. Electrical machine (11), in particular an electronically commutated electric motor (12), comprising a stator (10) according to one of the preceding claims and a rotor which has permanent-magnet poles and is arranged radially within the stator (10), wherein the electrical machine (11) is suitable for use in a liquid medium and preferably drives a fuel pump within a fuel tank.

14. Method for producing a stator (10) according to one of the preceding claims, **characterized by** the following steps:
- encapsulating a stator main body (14) with radial stator teeth (16) by injection moulding for the purpose of forming the insulating lamination (22),
- inserting conductor strips (26) with contact elements (24) into the insulating lamination (22),
- winding the coils (18) onto the stator teeth (16), wherein the winding wire (20) is connected to the contact elements (24) during the winding process between the stator teeth (16),
- preferably encapsulating the winding wire (20) by injection moulding after electrical contact is made with the said winding wire by the contact elements (24).

15. Method according to Claim 14, **characterized in that** winding of the coils (18) is executed by means of needle winding, wherein the winding needle, after completion of a first coil (18), deposits the winding wire (20) directly into a slit (60) of the contact element (24) and guides the winding wire (20) radially outside around a supporting element (58) of the insulating lamination (22) and then, without interrupting the winding wire (20), winds the next coil (18) - in particular onto the stator tooth (16) immediately adjacent in the circumferential direction (34).

## Revendications

1. Stator (10) pour une machine électrique (11), comprenant un corps de base de stator (14) de forme annulaire, lequel possède des dents de stator (16) radiales destinées à accueillir des bobines électriques (18), une lamelle isolante (22) étant disposée à un premier côté frontal (41) du corps de base de stator (14), laquelle isole du corps de base de stator (14) les bobines (18) formées par enroulement d'un fil de bobinage (20), des bandes conductrices (26) étant disposées dans la lamelle isolante (22), lesquelles possèdent des éléments de contact (24) électriques qui s'étendent dans le sens axial et au niveau desquels est appliqué le fil de bobinage (20) lors de l'enroulement des bobines (18), **caractérisé en ce que** plusieurs pattes de soutien (58) qui s'étendent dans le sens axial sont façonnées au moins sur une bande conductrice (26), lesquelles soutiennent le fil de bobinage (20) dans le sens radial (32), les pattes de soutien (58) étant recouvertes au niveau de leur côté extérieur radial par une paroi en matière plastique, réalisée sous la forme d'un prolongement axial (56), de la lamelle isolante (22).

2. Stator (10) selon la revendication 1, **caractérisé en ce que** les bandes conductrices (26) possèdent une section transversale conductrice (28) au moins approximativement rectangulaire et sont disposées sur chant dans la lamelle isolante (22) en référence à la direction axiale (30).

3. Stator (10) selon la revendication 2, **caractérisé en ce que** les bandes conductrices (26) sont réalisées sous la forme de tôles estampées qui s'étendent sous forme annulaire dans la lamelle isolante (22).

4. Stator (10) selon l'une des revendications précédentes, **caractérisé en ce que** la lamelle isolante (22) possède des rainures (46) circonférentielles annulaires dans lesquelles sont insérées, notamment coincées, les bandes conductrices (26).

5. Stator (10) selon l'une des revendications précédentes, **caractérisé en ce qu'**en vue de former trois phases électriques (50), exactement trois bandes conductrices (26) sont disposées, lesquelles possèdent respectivement un élément de raccordement (48) électrique qui s'étend notamment dans le sens radial par rapport au corps de base de stator (14).

6. Stator (10) selon l'une des revendications précédentes, **caractérisé en ce que** les plusieurs pattes de soutien (58) qui s'étendent dans le sens axial sont façonnées sur la bande conductrice (26) radialement au centre.

7. Stator (10) selon l'une des revendications précédentes, **caractérisé en ce qu'**un élément de contact (24) est disposé entre chaque dent de stator (16) dans la direction périphérique (34), et les éléments de contact (24) sont notamment réalisés sous la forme d'une languette de serrage (25) munie d'une fente (60) à travers laquelle le fil de bobinage (20) est guidé dans le sens radial.

8. Stator (10) selon l'une des revendications précédentes, **caractérisé en ce qu'**exactement une bobine (18) est enroulée sur chaque dent de stator (16) et, entre les bobines (18), le fil de bobinage (20) est relié électriquement de manière ininterrompue avec l'élément de contact (24) respectif, de préférence par estampage à chaud, et est notamment guidé dans le sens radial vers l'extérieur autour de la patte de soutien (58) respective.

9. Stator (10) selon l'une des revendications précédentes, **caractérisé en ce que** toutes les bobines (18) d'une phase (50) sont disposées électriquement en parallèle les unes des autres dans un circuit en triangle, et notamment un exactement douze bobines (18) au total sont formées dans trois phases (50).

10. Stator (10) selon l'une des revendications précédentes, **caractérisé en ce que** la lamelle isolante (22) est réalisée sous la forme d'un surmoulage en matière plastique du corps de base de stator (14), un prolongement radial (52) destiné à accueillir les éléments de raccordement (48) des bandes conductrices (26) étant façonné.

11. Stator (10) selon l'une des revendications précédentes, **caractérisé en ce que** le corps de base de stator (14) est constitué de lamelles en tôle (40) fermées annulaires individuelles empilées axialement, les lamelles en tôle (40) formant au niveau de leur bord extérieur radial (82) des œillets qui servent d'ouvertures de fixation (44) pour des éléments de liaison servant à fixer le stator (10).

12. Stator (10) selon l'une des revendications précédentes, **caractérisé en ce que** le fil de bobinage (20) est entièrement surmoulé au moyen d'une deuxième matière plastique (70), notamment en incluant la lamelle isolante (22) avec les bandes conductrices (26).

13. Machine électrique (11), notamment un moteur électrique (12) à commutation électronique, comprenant un stator (10) selon l'une des revendications précédentes et un rotor possédant un pôle magnétique permanent qui est disposé dans le sens radial à l'intérieur du stator (10), la machine électrique (11) étant adaptée à une utilisation dans un milieu liquide et entraînant de préférence une pompe à carburant à l'intérieur d'un réservoir à carburant.

14. Procédé de fabrication d'un stator (10) selon l'une des revendications précédentes, **caractérisé par** les étapes suivantes :
- surmoulage d'un corps de base de stator (14) comprenant des dents de stator (16) en vue de former les lamelles isolantes (22)
- insertion de bandes conductrices (26) munies d'éléments de contact (24) dans les lamelles isolantes (22)
- enroulement des bobines (18) sur les dents de stator (16) le fil de bobinage (20) étant relié aux éléments de contact (24) entre les dents de stator (16) lors de l'opération d'enroulement
- de préférence surmoulage du fil de bobinage (20) après sa mise en contact électrique avec les éléments de contact (24).

15. Procédé selon la revendication 14, **caractérisé en ce que** l'enroulement des bobines (18) est réalisé au moyen de l'enroulement par aiguille, l'aiguille d'enroulement déposant le fil de bobinage (20) directement dans une fente (60) de l'élément de contact (24) après avoir terminé une première bobine (18) et guidant le fil de bobinage (20) dans le sens radial vers l'extérieur autour d'un élément de soutien (58) de la lamelle isolante (22) et enroulant ensuite la bobine suivante (18), sans interruption du fil de bobinage (20), la notamment sur la dent de stator (16) directement voisine dans la direction périphérique (34).
